# EUROPEAN PATENT APPLICATION

(11) **EP 2 953 333 A1**
(43) Date of publication of application: **09.12.2015**
(21) Application number: 14305824.6
(22) Date of filing: 02.06.2014
(51) Int. Cl.: H04M 15/00, H04L 12/14

(54) **Multiple validity time management**

(71) Applicant: Alcatel Lucent, 92100 Boulogne-Billancourt (FR)
(72) Inventor: Rustagi, Saket, 110091 Delhi (IN); Singh, Paras, 122002 Gurgaon (IN)
(74) Representative: Mouney, Jérôme

(57) **Abstract**

For managing multiple validity times during the usage of a service associated with a current communication established by a communication device within a telecommunications network, a server included within the telecommunications network generates an answer (CCA), after reception of a request (CCR) coming from a network element capable of generating charging events while monitoring the communication's use of the network's resources, said request comprising an amount of requested service units, the answer (CCA) containing at least two balances, each balance having a validity begin time and a validity expiry time, and the amount of units that are available through the combination of said at least two balances during a time interval corresponding to said amount of requested service units, and sends the answer (CCA) to the network element.

## Description

### FIELD OF THE INVENTION

The present invention pertains to the management for granting units for a service associated with a current communication established by a user terminal.

### BACKGROUND

The document 3GPP TS32.299 defines a Ro interface for real-time charging between a Charging Trigger Function (CTF) module and an Online Charging System (OCS) module.

Trigger and re-authorization functions define events that the CTF module must monitor while delivering a service. Whenever such an event takes place-for example, a change of location or a change in quality of service-the CTF module must trigger a reauthorization for the OCS module in order to adapt the service's charging.

The OCS module monitors the delivery of a service by means of a Diameter session, during which charging is performed by reserving units. If, during the delivery of a service, a change takes place that may influence rates, the CTF module must produce a message to reserve new units with updated conditions. Currently, the Diameter Ro protocol does not provide a mechanism for granting units if all granted units are not valid throughout a Validity Time. This case could occur if total granted units are granted from multiple sources or balances with each source having its own validity. Hence, the Diameter client wouldn't know that the total units granted are not valid throughout the Validity Time. This will lead to increased number of requests towards the server and hence increase load on network.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for managing multiple validity times during the usage of a service associated with a current communication established by a communication device within a telecommunications network, comprising the following steps in a server included within the telecommunications network:
receiving a request coming from a network element capable of generating charging events while monitoring the communication's use of the network's resources, said request comprising an amount of requested service units,
generating an answer containing at least two balances, each balance having a validity begin time and a validity expiry time, and the amount of units that are available through the combination of said at least two balances during a time interval corresponding to said amount of requested service units, and
sending the answer to the network element.

Advantageously, the invention offers an additional feature to the telecommunication network, allowing the server to grant all requested units even if all the granted units are not valid throughout the provided Validity Time. In an embodiment, the network element sends an update request to the server, the update request containing the units consumed from each balance.

In an embodiment, each balance is associated with a tariff and the server rates units according to the consumed units associated with each balance.

The invention also pertains to a method for managing multiple validity times during the usage of a service associated with a current communication established by a communication device within a telecommunications network, comprising the following steps in a network element capable of generating charging events while monitoring the communication's use of the network's resources:
sending a request to a server, said request comprising an amount of requested service units,
receiving an answer from the server, the answer containing at least two balances, each balance having a validity begin time and a validity expiry time, and the amount of units that are available through the combination of said at least two balances during a time interval corresponding to said amount of requested service units,
sending an update request to the server, the update request containing the units consumed from each balance.

In an embodiment, the order of units appearing inside the update request coincides with the order of units in the in the answer.

The invention also pertains to a server for managing multiple validity times during the usage of a service associated with a current communication established by a communication device within a telecommunications network, the server comprising:
means for receiving a request coming from a network element capable of generating charging events while monitoring the communication's use of the network's resources, said request comprising an amount of requested service units,
means for generating an answer containing at least two balances, each balance having a validity begin time and a validity expiry time, and the amount of units that are available through the combination of said at least two balances during a time interval corresponding to said amount of requested service units, and
means for sending the answer to the network element.

The invention also pertains to a network element for managing multiple validity times during the usage of a service associated with a current communication established by a communication device within a telecommunications network, the network element being capable of generating charging events while monitoring the communication's use of the network's resources and comprising:
means for sending a request to a server, said request comprising an amount of requested service units,
means for receiving an answer from the server, the answer containing at least two balances, each balance having a validity begin time and a validity expiry time, and the amount of units that are available through the combination of said at least two balances during a time interval corresponding to said amount of requested service units,
means for sending an update request to the server, the update request containing the units consumed from each balance.

The invention also pertains to computer programs capable of being implemented within a server and within a network element, said programs comprising instructions which, when the programs are executed within said server and said communication device, carry out steps according to the inventive method.

The present invention and the benefits thereof shall be better understood upon examining the description below, which makes reference to the attached figures, in which:
- FIG. 1 is a schematic block diagram of a communication system according to one embodiment of the invention for managing multiple validity times for delivering a service; and
- FIG. 2 is an algorithm of a method for the management of multiple validity times for delivering a service according to one embodiment of the invention.

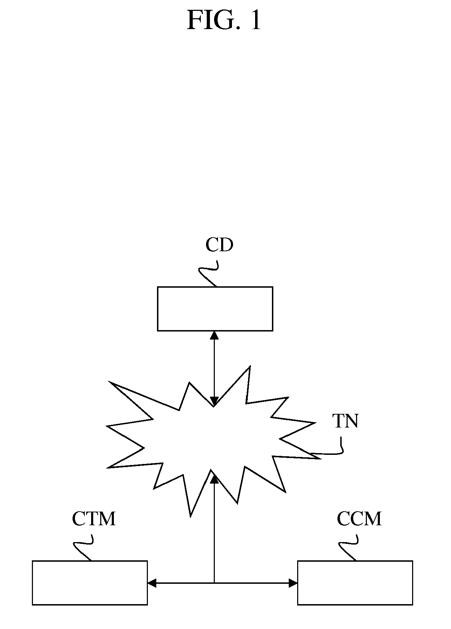

With reference to FIG. 1, a communication system according to the invention comprises a telecommunications network TN, a communication device CD, a charging trigger module CTM and a charging control module CCM.

In the remainder of the description, the term module may designate a device, a software program, or a combination of computer hardware and software, configured to execute at least one particular task.

The telecommunication network TN may be a wired or wireless network, or a combination of wired and wireless networks.

The communication device CD is capable of establishing a communication within a telecommunications network TN, for example with another user terminal. A communication device CD may, for instance, be a landline or mobile telephone, an electronic telecommunication device or object that is personal to the user and which may be a personal digital assistant (PDA) or a smartphone or a tablet, capable of being connected to an access terminal of a public wireless local area network (WLAN), or a wireless local area network that complies with one of the 802.1x standards, or a medium-range network using the Worldwide Interoperability for Microwave Access (WiMAX) protocol.

The charging trigger module CTM and the charging control module CCM communicate with one other over the telecommunications network TN, of the Internet type. In one variant, the charging trigger module CTM and the charging control module CCM communicate with one other over a local area network or over specialized lines through the network TN.

The charging trigger module CTM and the charging control module CCM may respectively be implemented in different servers, such as application servers.

A particular functionality of the charging trigger module CTM is to ensure that the service is delivered with the assistance of service units authorized by the charging control module CCM, which it regularly triggers in order to do so.

A particular functionality of the charging control module CCM is to determine an authorized number of service units for delivering the service, and to transmit an answer containing that authorized number of service units to the charging trigger module CTM. To that end, the module CCM may determine a rate associated with the account or sub-account to be used to charge the service, and may determine the authorized number of service units based on the rate and on the number of service units remaining in the account or sub-account.

Furthermore, whenever the charging control module CCM receives a number of units that are actually being used for the service, transmitted by the charging trigger module CTM, the module CCM decrements the corresponding account or sub-account.

According to one embodiment of the invention that will be referred to throughout the remainder of the description, the telecommunication network TN is a packet network connected to an IP Multimedia Subsystem (IMS) network.

It is assumed that the user terminal is capable of communicating through the telecommunications network TN connected to the IMS network, for example with another terminal, using communication compliant with the Session Initiation Protocol (SIP). For example, the communication corresponds to an exchange of multimedia flows regarding audio and/or video content, or instant messages. The communication established by the user terminal may also be a communication with a service server, such as a web server or multimedia content server.

The user's profile, containing the services to which that user has subscribed, is saved in a Home Subscriber Server (HSS) server that manages a database particularly containing users' identities, registration information, access parameters, and information needed to invoke the services that the users have subscribed to. In one implementation, the HSS server interacts with other entities of the IMS network using the Diameter protocol.

The control of a communication initiated by the terminal is performed within the IMS network, particularly by three Call State Control Function (CSCF) control entities: the entities Proxy CSCF (P-CSCF), Interrogating CSCF (I-CSCF), and Serving-CSCF (S-CSCF).

The entity P-CSCF is the first point of contact in the IMS network, and its address is discovered by the user terminal when a Packet Data Protocol (PDP) context is activated to exchange SIP messages.

The entity I-CSCF communicates with the entity P-CSCF and with the HSS server to assign the entity S-CSCF to the user based on the user's profile saved in the HSS server.

The entity S-CSCF is in charge of controlling the communication session established by the user terminal and invoking the services to which the user is subscribed.

The charging trigger module CTM queries the charging control module CCM for units to be consumed during the delivery of a service. The charging trigger module CTM and the charging control module CCM communicate with one another, for example, by means of the Diameter Ro protocol.

The charging control module CCM may be included in an online charging system (OCS), which may be a server located elsewhere in the IMS network.

The charging trigger module CTM may be included in a network element, such as an application server or Gateway GPRS Support Node (GGSN) gateway. For example, the charging trigger module CTM implements a Charging Trigger Function (CTF), which is a central point for collecting relevant information about charging events in the network and monitoring the communication's use of network resources.

The network element, in which is included the charging trigger module CTM, is capable of generating charging events while monitoring the communication's use of network resources.

The charging control module CCM determines the present price of a current communication based on a set of parameters and the values of those parameters associated with the price, particularly according to a tariff associated with a user's account balance.

According to one embodiment, the charging control module CCM is configured with different balances with optional differential tariffs, each balance having a validity begin time and a validity expiry time. The charging control module CCM calculates the amount of units that are available through the combination of the different balances for a request comprising an amount of requested service units corresponding to a time interval.

The charging control module CCM produces an answer CCA (Credit Control Answer) containing the amount of granted units, the answer to be sent to the charging trigger module CTM.

The charging trigger module CTM has a way of limiting consumption of granted units on the basis of unit level granularity provided in the answer. The charging trigger module CTM reports total consumption reported along with granular consumption detailing how much has been consumed from each balance. The order of units appearing inside Unit-Source-Granularity in the report message coincides with the order of units received in last answer from the charging control module CCM.

The charging trigger module CTM produces a request CCR (Credit Control Request) containing the amount of granular units for each balance, the request to be sent to the charging control module CCM.

The charging control module CCM can then apply differential tariff on granular units reported for each balance.

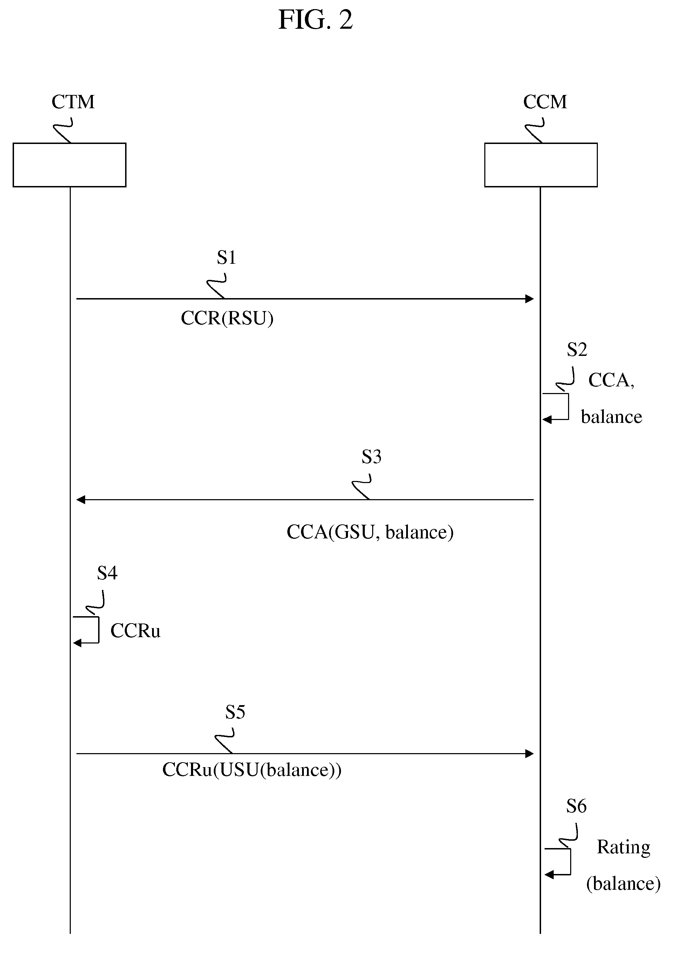

With reference to FIG. 2, a method for managing multiple validity times for delivering a service according to one embodiment of the invention comprises steps S1 to S6 executed within the communication system.

The method is described below with reference to a telecommunication network TN connected to an IMS network as an example.

In step S1, the communication device CD establishes a communication within the network TN, for example with a media server. The terminal transmits a communication session initiation message to the charging trigger module CTM. This message is, for example, an "INVITE" message, and particularly contains an identifier of the type of communication requested by the user, which corresponds, for example, to a session or a video session. The charging trigger module CTM identifies the user's profile and the type of service related to the communication. The module CTM transmits a Credit Control Request (CCR) to the charging control module CCM to request authorization to use the service related to the communication established by the communication device CD. The request is sent at a given time Tr.

The request CCR particularly contains an identifier of the service and a number of requested service units (RSUs). The service units may be related to monetary units or telephone credit units.

In step S2, the charging control module CCM calculates the amount of units that are available through the combination of the different balances for a request comprising an amount of requested service units corresponding to a time interval, beginning at time Tr and expiring at time Tv. The charging control module CCM is configured with different balances with optional differential tariffs, each balance having a validity begin time and a validity expiry time.

For example, the charging control module CCM has configured different balances associated with different time intervals, wherein in time T1 < T2 < T3 < T4 < T5 < T6:

| | |
|---|---|
| - if T1 < time < T3 | → Balance B1; |
| - if T2 < time < T5 | → Balance B2; |
| - if T4 < time < T6 | → Balance B3. |

For example, the time interval is such as T1 < beginning time Tr < T2 and T5 < expiring time Tv < T6, so time interval encompasses time periods associated with the balances B1, B2 and B3, each time period being defined by a validity begin time and a validity expiry time of the balance.

The charging control module CCM produces an answer CCA (Credit Control Answer) containing the amount of granted service units (GSUs) that corresponds to a maximum number of units that are debited over the course of the communication.

For example, the answer CCA contains the following information:

| | | |
|---|---|---|
| "Granted-Service-Unit | | |
| CC-Total-Octets | X | //=Xa+Xb+Xc |
| Unit-Source-Granularity | | |
| CC-Total-Octets | Xa | // Followed by Xa's Validity Begin & Expiry Time |
| Validity-Begin | - | |
| Validity-Expiry | seconds from CCA reception till T3 | |
| CC-Total-Octets | Xb | // Followed by Xb's Validity Begin & Expiry Time |
| Validity-Begin | seconds from CCA reception till T2 | |
| Validity-Expiry | seconds from CCA reception till T5 | |
| CC-Total-Octets | Xc | // Followed by Xc's Validity Begin & Expiry Time |
| Validity-Begin | seconds from CCA reception till T4 | |
| Validity-Expiry | -" | |

Because Xa is valid right after answer CCA reception, its Validity-Begin can be omitted or be empty. Because Xc is valid right till Validity-Time granted, its Validity-Expiry can be omitted.

In step S3, the charging control module CCM transmits the answer CCA to the charging trigger module CTM, the answer containing the granted units available through the combination of the different balances.

Once all the units have been debited, the charging trigger module CTM must automatically query the charging control module CCM again in order to request a number of units.

In step S4, the charging trigger module CTM monitors the consumption of the granted units. An event triggers the charging trigger module CTM to generate an update request CCRu to report back to the charging control module CCM.

For instance, the event can correspond to the consumption of all the granted units are consumed or the end of the communication established by the communication device CD.

According to RFC 4006, an update request contains credit-control information for an existing credit-control session and can be sent every time a credit-control re-authorization is needed at the expiry of the allocated quota or validity time.

In step S5, the charging trigger module CTM sends the update request CCRu to the charging control module CCM.

The update request CCRu contains the units consumed from each balance. The charging trigger module CTM sends an update request CCRu to the charging control module CCM. The update request CCRu contains the identifier of the service and the units consumed that can be called also Used Service Unit USU.

For instance, the update request CCRu contains the following information:

| | | |
|---|---|---|
| "Used-Service-Unit | | |
| CC-Total-Octets | X' | //=Xa'+Xb'+Xc' |
| Unit-Source-Granularity | | |
| CC-Total-Octets | Xa' | |
| CC-Total-Octets | Xb' | |
| CC-Total-Octets | Xc'" | |

The order of units appearing inside Unit-Source-Granularity in the Used-Service-Unit of the update request coincides with the order of units received in the Unit-Source-Granularity in the answer CCA.

In step S6, the charging control module CCM receives and analyses the update request CCRu and rates units on different tariffs, according to the consumed units associated with each time balance.

A request or an answer contains an AVP (Attribute-Value Pair) of type Grouped, called Unit-Source-Granularity. It provides granular details of total units reported or granted. When included inside a GSU (Granted-Service-Unit), a unit granted is followed immediately by its validity begin time and validity expiry time; if not, it indicates that this units instance is valid throughout the overall validity indicated by Validity-Time AVP.
Unit-Source-Granularity ::= < AVP Header: XXX >
*[CC-Time]
*[CC-Money]
*[CC-Total-Octets]
*[CC-Input-Octets]
*[CC-Output-Octets]
*[CC-Service-Specific-Units]
*[Validity-Begin]
*[Validity-Expiry]
*[AVP]

Validity-Begin is an AVP of type Unsigned32 and indicates validity begin time through seconds from CCA answer reception till the actual validity begin of the unit granted and detailed through Unit-Source-Granularity AVP.

Validity-Expiry is an AVP of type Unsigned32 and indicates validity expiry time through seconds from CCA answer reception till the actual validity expiry of the unit granted and detailed through Unit-Source-Granularity AVP.

A CCR request could be in the following form:
Used-Service-Unit ::= < AVP Header: 446 >
   [Unit-Source-Granularity]
   *[CC-Time]
   *[CC-Money]
   *[CC-Total-Octets]
   *[CC-Input-Octets]
   *[CC-Output-Octets]
   *[CC-Service-Specific-Units]
   *[AVP]

A CCA answer could be in the following form:
Granted-Service-Unit ::= < AVP Header: 431 >
   [Unit-Source-Granularity]
   *[CC-Time]
   *[CC-Money]
   *[CC-Total-Octets]
   *[CC-Input-Octets]
   *[CC-Output-Octets]
   *[CC-Service-Specific-Units]
   *[AVP]

The invention described here relates to a method, a service, and a network element for managing multiple tariff switches during the delivery of a service. According to one implementation of the invention, the steps of the invention are determined by the instructions of computer programs incorporated into the server or network element. The programs comprise program instructions which, when said programs are loaded and executed within the server and network element respectively, carry out the steps of the inventive method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the inventive method.

## Claims

1. A method for managing multiple validity times during the usage of a service associated with a current communication established by a communication device (CD) within a telecommunications network (TN), comprising the following steps in a server included within the telecommunications network:
receiving (S1) a request (CCR) coming from a network element capable of generating charging events while monitoring the communication's use of the network's resources, said request comprising an amount of requested service units,
generating (S2) an answer (CCA) containing at least two balances, each balance having a validity begin time and a validity expiry time, and the amount of units that are available through the combination of said at least two balances during a time interval corresponding to said amount of requested service units, and
sending (S3) the answer (CCA) to the network element.

2. A method according to claim 1, whereby the network element sends an update request (CCRu) to the server, the update request (CCRu) containing the units consumed from each balance.

3. A method according to claim 2, whereby each balance is associated with a tariff and the server rates units according to the consumed units associated with each balance.

4. A method for managing multiple validity times during the usage of a service associated with a current communication established by a communication device (CD) within a telecommunications network (TN), comprising the following steps in a network element capable of generating charging events while monitoring the communication's use of the network's resources:
sending (S1) a request to a server, said request comprising an amount of requested service units ,
receiving (S3) an answer (CCA) from the server, the answer (CCA) containing at least two balances, each balance having a validity begin time and a validity expiry time, and the amount of units that are available through the combination of said at least two balances during a time interval corresponding to said amount of requested service units,
sending (S6) an update request (CCRu) to the server, the update request (CCRu) containing the units consumed from each balance.

5. A method according to claims 4, whereby the order of units appearing inside the update request (CCRu) coincides with the order of units in the in the answer (CCA).

6. A server for managing multiple validity times during the usage of a service associated with a current communication established by a communication device (CD) within a telecommunications network (TN), the server comprising:
means (CCM) for receiving a request (CCR) coming from a network element capable of generating charging events while monitoring the communication's use of the network's resources, said request comprising an amount of requested service units ,
means (CCM) for generating an answer (CCA) containing at least two balances, each balance having a validity begin time and a validity expiry time, and the amount of units that are available through the combination of said at least two balances during a time interval corresponding to said amount of requested service units, and
means (CCM) for sending the answer (CCA) to the network element.

7. A network element for managing multiple validity times during the usage of a service associated with a current communication established by a communication device (CD) within a telecommunications network (TN), the network element being capable of generating charging events while monitoring the communication's use of the network's resources and comprising:
means (CTM) for sending a request to a server, said request comprising an amount of requested service units,
means (CTM) for receiving an answer (CCA) from the server, the answer (CCA) containing at least two balances, each balance having a validity begin time and a validity expiry time, and the amount of units that are available through the combination of said at least two balances during a time interval corresponding to said amount of requested service units,
means (CTM) for sending an update request (CCRu) to the server, the update request (CCRu) containing the units consumed from each balance.

8. A computer program capable of being implemented within a server for managing multiple tariff switches during the usage of a service associated with a current communication established by a communication device (CD) within a telecommunications network (TN), said program comprising instructions which, when the program is loaded and executed within said server, carry out the following steps:
receiving (S1) a request (CCR) coming from a network element capable of generating charging events while monitoring the communication's use of the network's resources, said request comprising an amount of requested service units
generating (S2) an answer (CCA) containing at least two balances, each balance having a validity begin time and a validity expiry time, and the amount of units that are available through the combination of said at least two balances during a time interval corresponding to said amount of requested service units, and
sending (S3) the answer (CCA) to the network element.

9. A computer program capable of being implemented within a network element for managing a multiple tariff switches during the usage of a service associated with a current communication established by a communication device (CD) within a telecommunications network (TN), the network element being capable of generating charging events while monitoring the communication's use of the network's resources and comprising, said program comprising instructions which, when the program is loaded and executed within said server, carry out the following steps:
sending (S1) a request to a server, said request comprising an amount of requested service units,
receiving (S3) an answer (CCA) from the server, the answer (CCA) containing at least two balances, each balance having a validity begin time and a validity expiry time, and the amount of units that are available through the combination of said at least two balances during a time interval corresponding to said amount of requested service units,
sending (S6) an update request (CCRu) to the server, the update request (CCRu) containing the units consumed from each balance.
